# EUROPÄISCHE PATENTSCHRIFT

(11) **EP 2 461 994 B1**
(45) Veröffentlichungstag und Bekanntmachung des Hinweises auf die Patenterteilung: **27.03.2013**
(21) Anmeldenummer: 10739545.1
(22) Anmeldetag: 26.07.2010
(51) Int. Cl.: B60J 5/10, E05F 15/00, E05F 15/12

(54) **VERFAHREN UND VORRICHTUNG ZUM ERKENNEN EINES AUSLÖSENS EINER KUPPLUNG IN EINEM KLAPPENANTRIEB**
METHOD AND DEVICE FOR DETECTING THE ACTIVATION OF A COUPLING IN A DAMPER ACTUATOR
PROCEDE ET DISPOSITIF POUR DETECTER UN DECLENCHEMENT D'UN ACCOUPLEMENT DANS UN ENTRAINEMENT DE CLAPET

(30) Priorität: 05.08.2009 DE 102009028249
(43) Veröffentlichungstag der Anmeldung: 13.06.2012
(73) Patentinhaber: Robert Bosch GmbH, 70442 Stuttgart (DE)
(72) Erfinder: KOBERSTAEDT, Markus, 77815 Buehl (DE); OIRSOUW, Harrie, 70173 Stuttgart (DE); DEMIR, Murat, 77815 Buehl (DE)
(86) Internationale Anmeldenummer: PCT/EP2010/060767
(87) Internationale Veröffentlichungsnummer: WO 2011/015477

(56) Entgegenhaltungen:
- WO-A2-2007/148181
- JP-A- 2004 027 751
- JP-A- 2007 161 175
- JP-A- 2007 177 538
- US-A1- 2001 035 725

## Beschreibung

### Technisches Gebiet

Die Erfindung betrifft Klappenantriebe, wie beispielsweise Kofferraumklappen und Fahrzeugtüren eines Kraftfahrzeugs, die elektrisch bedienbar sind.

### Stand der Technik

Klappensysteme zum elektrischen Öffnen und Schließen werden in Kraftfahrzeugen bei Kofferraumsystemen oder Fahrzeugtüren eingesetzt. Ausgelöst durch die Betätigung eines Bedienelements, wie z.B. einem Schalter, im Fahrgastraum des Kraftfahrzeugs oder durch ein Funkbedienelement wird ein Elektromotor aktiviert, um die Klappe zu öffnen. Der Elektromotor steht mit der jeweiligen Klappe (Fahrzeugtür, Kofferraumklappe und dergleichen) über ein Spindelgetriebe oder dergleichen in Verbindung, um eine entsprechende Geschwindigkeit und Kraft für den Öffnungsvorgang zur Verfügung zu stellen.

Ein Schließvorgang kann ebenfalls durch ein entsprechendes Bedienelement bzw. Funkbedienelement oder auch durch ein Drücken der Klappe in Schließrichtung ausgelöst werden. Weiterhin kann vorgesehen sein, dass beim Drücken der Klappe in Schließrichtung die Bewegung der Klappe über das entsprechende eine Drehung des Elektromotors bewirkt, der dadurch einen Generatorstrom erzeugt. Es kann vorgesehen werden, dass der erzeugte Generatorstrom den Schließvorgang triggert, so dass der Elektromotor zum Schließen der Klappe angesteuert wird und diese entsprechend geschlossen wird.

Im Allgemeinen bewirkt ein Ausüben einer Kraft auf das Schließelement eine Drehung des Elektromotors. Für den Fall, dass bei Ausüben einer Kraft auf das Schließelement, ein Schwellenwert überschritten wird, z.B. wenn ein Benutzer zum Öffnen oder Schließen der Klappe eine hohe Kraft aufwendet, oder die Klappe bei einer durch den Elektromotor angetriebenen Bewegung auf einen Widerstand stößt, ist zwischen dem Elektromotor und dem mit der der Klappe gekoppelten Getriebe eine Kupplung insbesondere eine Rutschkupplung, vorgesehen, die ab dem Wirken einer bestimmten Kraft (über einem Auslöseschwellenwert) auslöst. Das Auslösen der Kupplung bewirkt, dass die Bewegung der Klappe von der Bewegung des Elektromotors entkoppelt wird. Mit anderen Worten wird beim Auslösen der Kupplung in einem Klappenantrieb die zuvor kraftschlüssige Verbindung zwischen der Klappe und dem Elektromotor unterbrochen.

Bei elektrisch angetriebenen Klappensystemen wird üblicherweise eine Funktion realisiert, mit der eine maximale Offenstellung der Klappe von einem Benutzer programmiert werden kann. Um zu gewährleisten, dass die Position der maximalen Offenstellung nicht überschritten wird, muss die Position der Klappe jederzeit in dem das Klappensystem ansteuernden Steuergerät bekannt sein. Durch Feststellen der absoluten Rotorlage des Elektromotors und Zuordnen zu einer Klappenstellung ist dies in der Regel möglich. Ein Auslösen der Kupplung kann jedoch dazu führen, dass bei einem Klappensystem, bei dem die Stellung der Klappe nicht unmittelbar sondern nur über die Position des Rotors des Elektromotors bestimmt wird, die Positionsinformation für die Klappe verloren geht. Daher ist es notwendig, den Zeitpunkt des Auslösens der Kupplung zu erkennen, um festzustellen, wann die Positionsinformation für die Bestimmung der Klappenstellung nicht länger verwendet werden kann.

Aus der US 2001/035725 A1 ist bereits eine Verstelleinheit für eine Heckklappe bekannt, bei dem ein Sensor eine Drehgeschwindigkeit eines beweglichen Teils in einer Referenzlage bestimmt. Die Ableitung der Drehgeschwindigkeit nach der Zeit wird mit einem Wert verglichen, wobei ein Hindernis erkannt wird, wenn eine Abweichung zwischen dem Schwellwert und der ermittelten Ableitung besteht.

Es ist Aufgabe der vorliegenden Erfindung, ein Verfahren und eine Vorrichtung zum Erkennen eines Auslösens einer Kupplung in einem Klappensystem zur Verfügung zu stellen.

### Offenbarung der Erfindung

Diese Aufgabe wird durch das Verfahren gemäß Anspruch 1 und die Vorrichtung gemäß dem nebengeordneten Anspruch gelöst.

Weitere vorteilhafte Ausgestaltungen sind in den abhängigen Ansprüchen angegeben.

Gemäß einem ersten Aspekt ist ein Verfahren zum Feststellen eines Auslösens einer Kupplung in einem Klappenantrieb vorgesehen. Dabei koppelt die Kupplung einen Antriebsmotor mit einer verstellbaren Klappe, so dass die Klappe mit Hilfe des Antriebsmotors verstellbar ist, und wobei die Kopplung zwischen dem Antriebsmotor der Klappe unterbrochen wird, wenn eine Kraft oder ein Drehmoment auf die Klappe einen Maximalwert übersteigt. Das Verfahren umfasst die folgenden Schritte:
- Detektieren einer Angabe einer Verstellgeschwindigkeit, insbesondere einer Drehzahl des Antriebsmotors;
- Bestimmen eines Gradienten der Verstellgeschwindigkeit, insbesondere eines Drehzahlgradienten, mit Hilfe der Angabe der Verstellgeschwindigkeit;
- Feststellen eines Auslösens der Kupplung, indem bestimmt wird, ob der bestimmte Gradient einen vorbestimmten Gradientenschwellenwert über bzw. unterschreitet.

Eine Idee der Erfindung besteht darin, durch bloße Überwachung der Verstellgeschwindigkeit des Antriebmotors, z.B. einer Drehzahl eines Elektromotors zu erkennen, wenn die Kupplung auslöst und dadurch die Kraftübertragung zu der Klappe unterbricht. Bei Ausüben einer Kraft auf die Klappe, beispielsweise durch manuelle Betätigung oder Anschlag der Klappe an einem Widerstand, löst nach Überwindung der Haftreibung die Kupplung aus und die Kraftübertragung über die Kupplung ist aufgehoben oder erheblich vermindert. Beim Auslösen der Kupplung ändert sich in der Regel die Verstellgeschwindigkeit des Antriebmotors, insbesondere die Drehzahl eines Elektromotors, da sich eine deutliche schnelle Änderung des Lastmoments ergibt. Dies ist in der Regel unabhängig davon, ob die Drehzahl des Elektromotors geregelt ist oder nicht. Wird ein Gradient der Verstellgeschwindigkeit festgestellt wird, der über einem Gradientenschwellenwert liegt, so kann von einem Auslösen der Kupplung ausgegangen werden. In diesem Fall kann beispielsweise eine Funktion des Klappensystems zum Anfahren einer maximalen, vom Benutzer definierten Öffnungshöhe deaktiviert werden. Weiterhin kann vorgesehen sein, dass, wenn ein Auslösen der Kupplung festgestellt wird, ein Ansteuern des Antriebsmotors nur noch in Schließrichtung der Klappe zugelassen wird.

Es kann vorgesehen sein, dass bei Nichtvorliegen eines Auslösens der Kupplung, die Stellung der Klappe über eine Position eines Läufers des Antriebsmotors detektiert wird.

Gemäß einer Ausführungsform kann beim Verfahren der Klappe die Stellung der Klappe auf eine maximale Offenstellung begrenzt werden.

Insbesondere kann vorgesehen sein, dass, wenn ein Auslösen der Kupplung festgestellt wird, die Klappe in Schließrichtung bis zu einer Endstellung verfahren wird, wobei, wenn die Klappe die Endstellung erreicht hat, die Stellung der Klappe einer Läuferposition des Antriebsmotors zugeordnet wird.

Gemäß einem weiteren Aspekt kann eine Vorrichtung zum Feststellen eines Auslösens einer Kupplung in einem Klappenantrieb, insbesondere in einem Kraftfahrzeug, vorgesehen sein. Die Vorrichtung umfasst:
- einen Antriebsmotor;
- eine Kupplung, die ausgebildet ist, um den Antriebsmotor mit einer verstellbaren Klappe zu koppeln, so dass die Klappe mit Hilfe des Antriebsmotors verstellbar ist, und wobei die Kupplung ausgebildet ist, um die Kopplung zwischen dem Antriebsmotor der Klappe zu unterbrechen, wenn eine Kraft oder ein Drehmoment auf die Klappe einen Maximalwert übersteigt,
   mit einem Steuergerät, das ausgebildet ist,
- um eine Angabe einer Verstellgeschwindigkeit, insbesondere einer Drehzahl des Antriebsmotors, zu detektieren;
- um einen Gradienten der Verstellgeschwindigkeit, insbesondere eines Drehzahlgradienten, mit Hilfe der Angabe der Verstellgeschwindigkeit zu bestimmen;
- um ein Auslösen der Kupplung festzustellen, indem bestimmt wird, ob der bestimmte Gradient einen vorbestimmten Gradientenschwellenwert über bzw. unterschreitet.

### Kurzbeschreibung der Zeichnungen

Bevorzugte Ausführungsformen der Erfindung werden nachfolgend anhand der beigefügten Zeichnungen näher erläutert. Es zeigen:
- Figur 1: eine schematische Darstellung eines Klappensystems;
- Figur 2: eine schematische Darstellung des Drehzahlverlaufs bei einem Auslösen der Kupplung durch Einwirken einer äußeren Kraft auf die Klappe.

### Beschreibung von Ausführungsformen

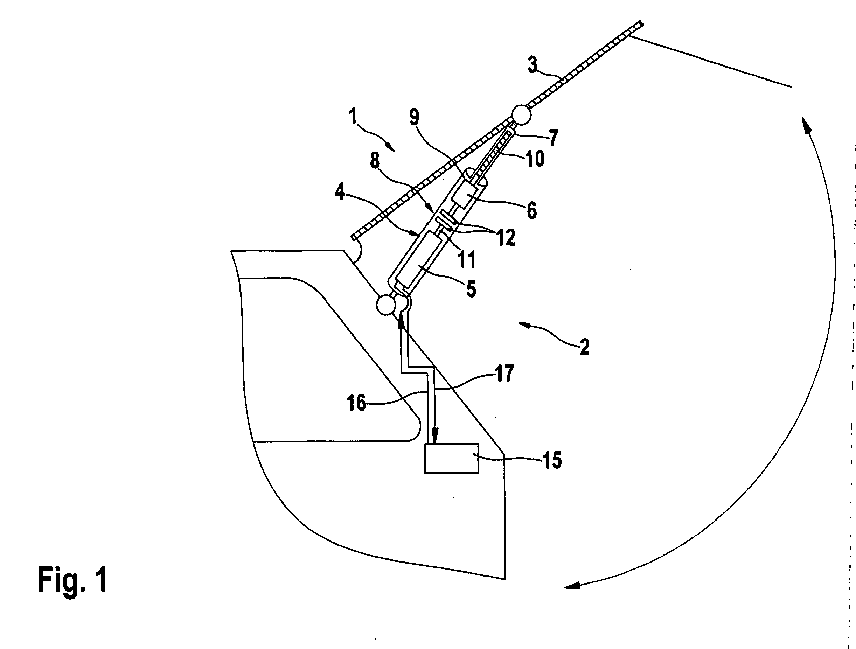

Figur 1 zeigt einen hinteren Teil eines Kraftfahrzeugs 1 mit einem Kofferraum 2, der durch eine Kofferraumklappe 3 verschließbar ist. Die Kofferraumklappe 3 kann durch ein elektrisches Antriebssystem 4 geöffnet bzw. geschlossen werden.

Das Antriebssystem 4 umfasst einen Elektromotor 5, der mit einem Getriebe 6 mechanisch gekoppelt ist. Im vorliegenden Ausführungsbeispiel wird eine rotatorische Bewegung einer Abtriebswelle 11 des Elektromotors 5 in dem Getriebe 6 in eine translatorische Bewegung eines Gestänges 7 umgesetzt, das an der Kofferraumklappe 3 angreift. Dabei verschiebt sich eine Spindel 10 in einem Zylinder 9 eines Getriebes 6, so dass sich die gesamte Länge des Gestänges 7 verändert. Durch das translatorische Verschieben des Gestänges 7 bzw. der Spindel 10 lässt sich somit die Kofferraumklappe 3, die schwenkbeweglich aufgehängt ist, öffnen und schließen.

Zwischen dem Elektromotor 5 und dem Getriebe 6 ist weiterhin eine Kupplung 8, insbesondere eine Rutschkupplung angeordnet. Die Kupplung 8 ist wie eine herkömmliche Kupplung ausgeführt, z.B. mit zwei Kupplungsplatten 12, die mit einer Kraft gegeneinander gedrückt werden, um so eine Kopplung zum Übertragen eines Drehmoments durch eine Haftreibungskraft zu erreichen. Bei Überschreiten der Differenz der über die Antriebs- bzw. Abtriebswelle auf die Kupplungsplatten wirkenden Drehmomente löst die Kupplung aus und die Kupplungsplatten rutschen relativ zueinander, so dass sich die Drehzahlen von Antriebs- und Abtriebswelle unterscheiden. Die Kupplung 8 ist so dimensioniert, dass sie bei Wirken einer ausreichend großen Auslösekraft in Bewegungsrichtung des Gestänges 7, d.h. eine auf das Gestänge 7 wirkende Kraft, bzw. bei einem ausreichend hohen Auslösemoment, das auf Kupplungsplatten wirkt, auslöst.

In alternativen Ausführungsformen kann die Kupplung auch zwischen dem Getriebe 6 und dem Gestänge 7 vorgesehen sein. In diesem Fall kann es sich beispielsweise um eine Plattenkupplung handeln, bei der zwei Platten aneinander gepresst werden, so dass bei Überschreiten der dadurch bewirkten Haftreibung die Platten sich gegeneinander bewegen und dadurch die Länge des Gestänges 7 verändert wird.

Das Antriebssystem 4 wird von einem Steuergerät 15 elektrisch über entsprechende Versorgungsleitungen 16 angesteuert. Das Steuergerät 15 steht mit Bedienelementen (nicht gezeigt) in Verbindung, durch die der Benutzer anzeigen kann, ob die Kofferraumklappe 3 geöffnet oder geschlossen werden soll. Weiterhin erfasst das Steuergerät 15 über eine entsprechende Signalleitung von dem Elektromotor 5 ein Positionssignal PS, das die absolute Lage eines Rotors des Elektromotors 5 angibt. Das Positionssignal PS kann von einem an dem Elektromotor 5 angeordneten Positionssensor (nicht gezeigt) bereitgestellt werden. Das Positionssignal PS dient dazu, die aktuelle Position der Kofferraumklappe 3 festzustellen. Dies erfolgt über eine definierte Zuordnung der aktuellen Position des Rotors des Elektromotors 5 zu einer Stellung der Kofferraumklappe 3. Um dies durchführen zu können, ist eine definierte feste Kopplung zwischen dem Rotor des Elektromotors 5 und der Stellung der Kofferraumklappe 3 notwendig.

Häufig ist eine Funktion in dem Steuergerät 15 realisiert, wonach die Kofferraumklappe 3 beim Öffnen nur eine bestimmte Maximalposition, die von einem Benutzer vorgegeben ist, anfährt. Dadurch kann vermieden werden, dass die Kofferraumklappe 3 an einen Widerstand wie z.B. eine Garagendecke, anstößt. Bei einem elektrisch angetriebenen Öffnungsvorgang wird der Elektromotor entsprechend an der Maximalposition gestoppt.

Löst jedoch die Kupplung 8 aus und ist diese zwischen dem Rotor des Elektromotors 5, dessen absolute Position festgestellt wird, und der Kofferraumklappe 3 angeordnet, so geht die Information über die Stellung der Kofferraumklappe 3 verloren. Dadurch wäre die obige Funktion des Begrenzen eines Öffnungsvorganges auf eine Maximalposition-nicht mehr ausführbar, da sobald festgestellt worden ist, dass die Kupplung 8 ausgelöst hat, die Positionsinformation PS nicht mehr einer Stellung der Kofferraumklappe 3 zugeordnet werden kann.

Zum erneuten Kalibrieren der Kofferraumklappe 3 muss diese in eine definierte Stellung verfahren werden bzw. vollständig geschlossen werden. Der die definierte Stellung muss detektierbar sein, d.h. z.B. der Zustand des vollständigen Schließens der Kofferraumklappe 3 muss detektierbar sein, beispielsweise durch einen Anstieg des Stroms durch den Elektromotor 5 bei Blockieren der Kofferraumklappe 3 durch einen Endanschlag. Weiterhin kann der Endanschlag auch durch einen entsprechenden Sensor dem Steuergerät 9 signalisiert werden.

Der Kalibrierungsvorgang sollte aus Komfortgründen nicht oft durchgeführt werden. Es ist nun vorgesehen, zu detektieren, wenn die Kupplung ausgelöst hat, und vorzugsweise nur bei ausgelöster Kupplung eine Kalibrierung vorzunehmen. Dazu wird die Drehzahl des Elektromotors 5 beispielsweise durch Auswerten des Positionssignals PS überwacht und anhand einer Änderung des Drehzahlsignals auf ein Auslösen der Kupplung 8 geschlossen. Eine Angabe über die Drehzahl kann z.B. aus einer detektierten Positionsinformation abgeleitet werden, indem eine Lageänderung über einem definierten Zeitfenster bestimmt wird. Durch eine zeitliche Ableitung der Angabe der Drehzahl kann dadurch eine Drehzahländerung detektiert werden.

Aufgrund der Trägheit des Gesamtsystems, d.h. der Masse der Kofferraumklappe 3 mit Trägheitsmoment des Elektromotors 5 und des Getriebes 6 sowie der Trägheit des Gestänges 7, finden beim elektromotorischen Betreiben der Kofferraumklappe 3 Drehzahländerungen statt, die jedoch einen bestimmten Drehzahlgradientenwert nicht übersteigen. Bei einem Anschlagen der Kofferraumklappe 3 an einen Widerstand bzw. durch Ausüben einer Kraft auf die Kofferraumklappe, die über die bei einem manuellen Betätigen der Kofferraumklappe 3 hinausgeht, allgemein durch Aufwenden einer hohen Kraft kann die Kupplung 8 ausgelöst werden, wenn eine Haftreibung überwunden wird. Um ein manuelles Verstellen der Kofferraumklappe 3 zuzulassen, ist ein Auslösegrenzwert, bei dem die Kupplung 8 auslöst, so hoch gewählt, dass eine manuelle Betätigung der Kofferraumklappe 3 nicht automatisch zu einem Auslösen der Kupplung 8 führt. Erst bei Auftreten einer noch höheren Kraft, wie beispielsweise beim Anschlag der Kofferraumklappe 3 an einen Widerstand, wird aus Sicherheitsgründen die Kupplung 8 ausgelöst.

Ein Auslösen wirkt sich in einer schnellen Änderung der Drehzahl des Elektromotors 5 aus. Wirkt die Kraft auf die Kofferraumklappe 3 in Richtung einer Stellbewegung des Elektromotors 5, so wird zunächst der Elektromotor 5 durch das Einwirken der Kraft auf die Kofferraumklappe 3 schneller; bei Auslösen der Kupplung 8 wird die Kopplung zwischen der Bewegung der Kofferraumklappe 3 und der Drehbewegung des Elektromotors 5 jedoch stark reduziert, so dass das von dem Getriebe einwirkende Drehmoment abfällt und dadurch die Drehzahl plötzlich abnimmt. Der Betrag des Gradienten der Drehzahländerung übersteigt dann einen bestimmten Drehzahlgradientenschwellenwert und es kann auf ein Auslösen der Kupplung 8 geschlossen werden.

Wenn in einem anderen Fall eine Kraft auf die Kofferraumklappe 3 ausgeübt wird, die der Antriebsbewegung des Elektromotors 5 entgegenwirkt, so wird der Elektromotor 5 zunächst langsamer, bis die Kupplung 8 auslöst. Nach dem Auslösen der Kupplung 8 wird die Drehzahl plötzlich schneller, wobei der dann vorliegende Drehzahlgradient den Drehzahlgradientenschwellenwert übersteigt.

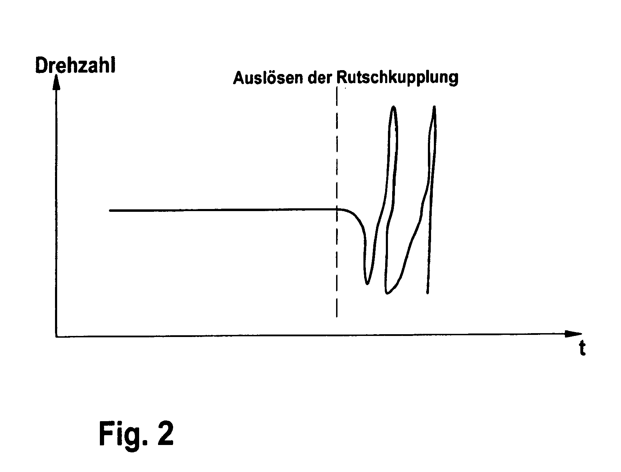

Figur 2 zeigt den Drehzahlverlauf vor und nach einem Auslösen einer derartigen Kupplung 8, wenn die Drehzahl des Elektromotors 5 durch eine Regelung geregelt ist. Aufgrund des hohen Betrags des Drehzahlgradienten, nachdem die Kupplung 8 ausgelöst hat, findet ein starker Eingriff in die Regelung statt, der zu einem Schwingen der Regelung führt. Dies ist aus der Figur 2 leicht erkennbar.

Weiterhin kann vorgesehen sein, dass nach dem Erkennen eines Auslösens der Kupplung 8 ein Verfahren der Kofferraumklappe 3 mit Hilfe des Antriebssystems 4 nur in Richtung der geschlossenen Position zugelassen werden, um zu vermeiden, dass eine vom Benutzer festgelegte Maximalposition, d.h. Öffnungsposition der Kofferraumklappe 3, nicht überschritten wird. Dadurch kann eine etwaige Beschädigung der Kofferraumklappe 3 vermieden werden.

Das oben beschriebene Verfahren lässt sich grundsätzlich auf alle elektrisch betreibbaren Öffnungsmechanismen anwenden, bei denen eine Klappe vor eine Öffnung verfahrbar ist, um die Öffnung zu öffnen oder zu verschließen.

## Patentansprüche

1. Verfahren zum Feststellen eines Auslösens einer Kupplung (8) in einem Klappenantrieb,
wobei die Kupplung einen Antriebsmotor (5) mit einer verstellbaren Klappe (3) koppelt, so dass die Klappe (3) mit Hilfe des Antriebsmotors (5) verstellbar ist, und wobei die Kopplung zwischen dem Antriebsmotor (5) und der Klappe (3) unterbrochen wird, wenn eine Kraft oder ein Drehmoment auf die Klappe (3) einen Maximalwert übersteigt, mit folgenden Schritten:
- Detektieren einer Angabe einer Verstellgeschwindigkeit, insbesondere einer Drehzahl des Antriebsmotors (5);
- Bestimmen eines Gradienten der Verstellgeschwindigkeit, insbesondere eines Drehzahlgradienten, mit Hilfe der Angabe der Verstellgeschwindigkeit;
- Feststellen eines Auslösens der Kupplung (8), indem bestimmt wird, ob der bestimmte Gradient einen vorbestimmten Gradientenschwellenwert über bzw. unterschreitet.

2. Verfahren nach Anspruch 1, wobei, wenn ein Auslösen der Kupplung (8) festgestellt wird, ein Ansteuern des Antriebsmotors (5) nur noch in Schließrichtung der Klappe (3) zugelassen wird.

3. Verfahren nach Anspruch 1 oder 2, wobei bei Nichtvorliegen eines Auslösens der Kupplung (8), die Stellung der Klappe (3) über eine Position eines Läufers des Antriebsmotors (5) detektiert wird.

4. Verfahren nach Anspruch 3, wobei beim Verfahren der Klappe (3) die Stellung der Klappe (3) auf eine maximale Offenstellung begrenzt wird.

5. Verfahren nach Anspruch 4, wobei, wenn ein Auslösen der Kupplung (8) festgestellt wird, die Klappe (3) in Schließrichtung bis zu einer Endstellung verfahren wird, wobei, wenn die Klappe (3) die Endstellung erreicht hat, die Stellung der Klappe (3) einer Läuferposition eines Läufers des Antriebsmotors (5) zugeordnet wird.

6. Vorrichtung zum Feststellen eines Auslösens einer Kupplung (8) in einem Klappenantrieb, insbesondere in einem Kraftfahrzeug, umfassend:
- -einen Antriebsmotor (5);
- eine Kupplung (8), die ausgebildet ist, um den Antriebsmotor (5) mit einer verstellbaren Klappe (3) zu koppeln, so dass die Klappe (3) mit Hilfe des Antriebsmotors (5) verstellbar ist, und wobei die Kupplung (8) ausgebildet ist, um die Kopplung zwischen dem Antriebsmotor (5) der Klappe (3) zu unterbrechen, wenn eine Kraft oder ein Drehmoment auf die Klappe (3) einen Maximalwert übersteigt,
mit einem Steuergerät (15), das ausgebildet ist,
- um eine Angabe einer Verstellgeschwindigkeit, insbesondere einer Drehzahl des Antriebsmotors (5), zu detektieren;
- um einen Gradienten der Verstellgeschwindigkeit, insbesondere eines Drehzahlgradienten, mit Hilfe der Angabe der Verstellgeschwindigkeit zu bestimmen;
- um ein Auslösen der Kupplung (8) festzustellen, indem bestimmt wird, ob der bestimmte Gradient einen vorbestimmten Gradientenschwellenwert über bzw. unterschreitet.

## Claims

1. Method for detecting a disengagement of a clutch (8) in a flap drive,
wherein the clutch couples a drive motor (5) to an adjustable flap (3) such that the flap (3) can be adjusted by means of the drive motor (5), and wherein the coupling action between the drive motor (5) and the flap (3) is eliminated if a force or a torque acting on the flap (3) exceeds a maximum value, having the following steps:
- detecting data regarding an adjustment speed, in particular a rotational speed of the drive motor (5) ;
- determining a gradient of the adjustment speed, in particular a rotational speed gradient, by means of the data regarding the adjustment speed;
- detecting a disengagement of the clutch (8) by determining whether the predetermined gradient exceeds or undershoots a predetermined gradient threshold value.

2. Method according to Claim 1, wherein, if a disengagement of the clutch (8) is detected, an activation of the drive motor (5) is permitted only in the direction for closing the flap (3).

3. Method according to Claim 1 or 2, wherein, if a disengagement of the clutch (8) is not present, the position of the flap (3) is detected from a position of a rotor of the drive motor (5).

4. Method according to Claim 3, wherein during the movement of the flap (3), the position of the flap (3) is limited to a maximum open position.

5. Method according to Claim 4, wherein, if a disengagement of the clutch (8) is detected, the flap (3) is moved in the closing direction until an end position is reached, wherein when the flap (3) has reached the end position, the position of the flap (3) is assigned to a rotor position of a rotor of the drive motor (5).

6. Device for detecting a disengagement of a clutch (8) in a flap drive, in particular in a motor vehicle, comprising:
- a drive motor (5);
- a clutch (8) which is designed to couple the drive motor (5) to an adjustable flap (3) such that the flap (3) can be adjusted by means of the drive motor (5), and wherein the clutch (8) is designed to eliminate the coupling action between the drive motor (5) and the flap (3) if a force or a torque acting on the flap (3) exceeds a maximum value,
having a control unit (15) which is designed
- to detect data regarding an adjustment speed, in particular a rotational speed of the drive motor (5);
- to determine a gradient of the adjustment speed, in particular a rotational speed gradient, by means of the data regarding the adjustment speed;
- to detect a disengagement of the clutch (8) by determining whether the determined gradient exceeds or undershoots a predetermined gradient threshold value.

## Revendications

1. Procédé pour constater un désaccouplage d'un accouplement (8) dans un entraînement de hayon, l'accouplement accouplant un moteur d'entraînement (5) avec un hayon déplaçable (3), de sorte que le hayon (3) puisse être déplacé à l'aide du moteur d'entraînement (5), et l'accouplement entre le moteur d'entraînement (5) et le hayon (3) étant interrompu lorsqu'une force ou un couple sur le hayon (3) dépasse une valeur maximale, le procédé comprenant les étapes suivantes :
- détection d'une indication d'une vitesse de déplacement, en particulier d'un régime du moteur d'entraînement (5) ;
- détermination d'un gradient de la vitesse de déplacement, en particulier d'un gradient de régime, à l'aide de l'indication de la vitesse de déplacement ;
- constatation d'un désaccouplage de l'accouplement (8) en déterminant si le gradient déterminé dépasse ou devient inférieur à une valeur seuil de gradient prédéterminée.

2. Procédé selon la revendication 1, dans lequel une commande du moteur d'entraînement (5) n'est autorisée que dans la direction de fermeture du hayon (3) lorsqu'un désaccouplage de l'accouplement (8) est constaté.

3. Procédé selon la revendication 1 ou 2, dans lequel, en l'absence d'un désaccouplage de l'accouplement (8), la position du hayon (3) est détectée par le biais d'une position d'un induit du moteur d'entraînement (5).

4. Procédé selon la revendication 3, dans lequel la position du hayon (3) est limitée à une position d'ouverture maximale lors du déplacement du hayon (3).

5. Procédé selon la revendication 4, dans lequel, lorsqu'un désaccouplage de l'accouplement (8) est constaté, le hayon (3) est déplacé dans la direction de fermeture jusqu'à une position finale, et dans lequel, lorsque le hayon (3) a atteint la position finale, la position du hayon (3) est associée à une position d'induit d'un induit du moteur d'entraînement (5).

6. Dispositif pour constater un désaccouplage d'un accouplement (8) dans un entraînement de hayon, en particulier dans un véhicule automobile, comportant :
- un moteur d'entraînement (5) ;
- un accouplement (8) qui est conçu pour accoupler le moteur d'entraînement (5) avec un hayon déplaçable (3), de sorte que le hayon (3) puisse être déplacé à l'aide du moteur d'entraînement (5), et l'accouplement (8) étant conçu pour interrompre l'accouplement entre le moteur d'entraînement (5) et le hayon (3) lorsqu'une force ou un couple sur le hayon (3) dépasse une valeur maximale,
avec un appareil de commande (15) qui est conçu
- pour détecter une indication d'une vitesse de déplacement, en particulier d'un régime du moteur d'entraînement (5) ;
- pour déterminer un gradient de la vitesse de déplacement, en particulier un gradient de régime, à l'aide de l'indication de la vitesse de déplacement ;
- pour constater un désaccouplage de l'accouplement (8) en déterminant si le gradient déterminé dépasse ou devient inférieur à une valeur seuil de gradient prédéterminée.
